# EUROPEAN PATENT APPLICATION

(11) **EP 2 202 271 A1**
(43) Date of publication of application: **30.06.2010**
(21) Application number: 08173000.4
(22) Date of filing: 29.12.2008
(51) Int. Cl.: C08L 23/14, C08L 23/16, C08L 23/18

(54) **Alpha-nucleated polypropylene for power cable insulation**

(71) Applicant: Borealis AG, 1220 Vienna (AT)
(72) Inventor: Machl, Doris, 4931 Mettmach (AT); Klimke, Katja, 4020 Linz (AT)
(74) Representative: Haggenmüller, Christian

(57) **Abstract**

The present invention relates to a heterophasic polymer composition, comprising
(i) a matrix which comprises a propylene copolymer or a blend of two or more propylene copolymers, wherein the propylene copolymer or the blend of propylene copolymers represents at least 85 wt% of the matrix and comprises comonomer units derived from ethylene and/or a _{C4-12} alpha-olefin, and
(ii) an elastomeric propylene copolymer which is dispersed within the matrix and comprises comonomer units derived from ethylene and/or a C₄₋₁₂ alpha-olefin;
(iii) a polymeric alpha-nucleating agent which comprises monomer units derived from a vinyl compound of the following chemical formula 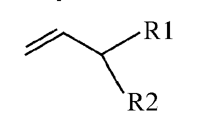 wherein R1 and R2 independently represent a substituted or unsubstituted alkyl, cycloalkyl or aryl, or R1 and R2 together form a saturated, unsaturated or aromatic ring system;
the heterophasic polymer composition further having
(iv) a xylene cold soluble fraction of at least 15 wt%.

## Description

The present invention relates to a heterophasic polymer composition which is useful for the preparation of a cable layer, and to an electric cable comprising a layer made of the heterophasic polymer composition and having improved electrical properties such as improved electrical breakdown strength and dissipation factor.

Nowadays, ethylene polymer products are used as insulation and semiconducting shields for low, medium and high voltage cables, respectively, due to beneficial processability and electrical properties. In addition, in low voltage applications polyvinyl chloride (PVC) is also commonly used as insulation material, usually in combination with softeners to reach desirable softness of cables. A draw back with PVC is the restricted operation temperature of 70°C by standardization. This has to be seen in relation to the fact that PVC has a restricted mechanical performance at elevated temperatures. In addition, softeners have to be added to PVC in order to maintain a high level of flexibility. Insufficient amounts of softeners reduce low temperature properties of PVC significantly. From an environmental point of view, the presence of these softeners may cause problems.

Cables comprising polyethylene layers are commonly operated at 70°C. However, there is a need of higher operating temperatures, which then require cross-linking of the polyethylene, otherwise the polyethylene would soften or even melt. Hence, in the cable sector, the coating surrounding the conductor commonly consists of cross-linked polyethylene materials to give a satisfactory mechanical performance even under heating in continuous use and under conditions of current overload while at the same time maintaining a high level of flexibility.

On the other hand, a disadvantage of these products is that cross-linked products are hard to recycle. Moreover, in some cases the outer-protective sheet consists of polyvinyl chloride (PVC) which is difficult to separate by conventional methods from the cross-linked poly olefins containing inorganic fillers. When the cable has reached the end of its operational lifetime, the whole cable has to be disposed and, in case of combustion, highly toxic chlorinated products are generated.

In the case of peroxide curing of cables, the cross-linking stage itself is a limiting factor in terms of line speed. Moreover, in processing such cables by extrusion, it is important that cross-linking does not occur until the mixture has left the extruder, since premature cross-linking or scorch makes it impossible to maintain a uniform production capacity, and furthermore the quality of the resulting product will be unsatisfactory. Cross-linking or pre-curing within the extruder causes gelation and adhesion of the polymer gel to surfaces of the equipment.

To overcome the problems outlined above, polypropylene materials have also been used for the preparation of cable layers.

WO 2006/007918 discloses a heterophasic polymer composition for the preparation of cable insulation layers which comprises a polypropylene matrix and, dispersed therein, a propylene copolymer having a weight average particle size of less than 1 µm.

Of course, if insulation layers are made of propylene polymers, the resulting cable should have beneficial electrical properties such as high electrical breakdown strength and a low dissipation factor.

Electrical breakdown strength is a measure of the electric field strength that an insulating material can withstand intrinsically without break down, i.e. without failure of its insulating properties. Thus, it is desired to provide high values for electrical breakdown strength.

The dissipation factor (tan delta) is the ratio of the power loss in a dielectric material to the total power. Thus, it is desired to have a low dissipation factor as it minimizes the waste of electric energy as heat. For medium and high voltage electrical cables, it is particularly preferred to have a low dissipation factor at higher temperature, as these cables are typically operated at a temperature of at least 70°C

However, besides electrical properties, there are further properties which have to be taken into account. Electrical cables should still have sufficient softness. In other words, insulation layers of high stiffness should be avoided.

Furthermore, it is also desired to apply the polymeric insulation layers onto the cable at high extrusion rate.

A known measure to modify the properties of propylene polymers in general is the addition of nucleating agents, which favour either the formation of the crystal alpha-phase (i.e. alpha-nucleating agent) or the crystal beta-phase of polypropylene (i.e. beta-nucleating agent).

WO 99/24479 discloses a nucleated propylene polymer containing 0.0001 to 1 wt% of a polymerized vinyl compound. With such a nucleated polypropylene, it is possible to prepare pipes of improved stiffness.

WO 00/68315 discloses a nucleated high-stiffness polypropylene composition obtainable by polymerisation in the presence of a catalyst system which has been modified by prepolymerisation with a vinyl compound.

EP 1 818 365 A1 discloses a polymer composition comprising (i) a polypropylene which includes a polymeric nucleating agent, and (ii) a heterophasic propylene polymer. The polymer composition is suitable for the preparation of articles by moulding, thermoforming, and extrusion. It is mentioned that preferred articles have a tensile modulus of at least 1200 MPa.

Considering the statements provided above, it is an object of the present invention to provide a polypropylene which is useful for the preparation of cable layers having improved electrical properties, while simultaneously maintaining softness on an acceptable level.

According to a first aspect of the present invention, the object is solved by providing a heterophasic polymer composition, comprising
(i) a matrix which comprises a propylene copolymer or a blend of at least two propylene copolymers, wherein the propylene copolymer or the blend of propylene copolymers represents at least 85 wt% of the matrix and comprises comonomer units derived from ethylene and/or a C₄₋₁₂ alpha-olefin; and
(ii) an elastomeric propylene copolymer which is dispersed within the matrix and comprises comonomer units derived from ethylene and/or a C₄₋₁₂ alpha-olefin;
(iii) a polymeric alpha-nucleating agent which comprises monomer units derived from a vinyl compound of the following chemical formula 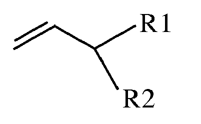 wherein R1 and R2 independently from each other represent a substituted or unsubstituted alkyl, cycloalkyl or aryl, or R1 and R2 together form a saturated, unsaturated or aromatic ring system;
   the heterophasic polymer composition further having
(iv) a xylene cold soluble fraction (XCS) of at least 15 wt%.

Preferably, the matrix and/or the propylene copolymer(s) of the matrix has/have an amount of comonomer units of 0.5 wt% to 6.0 wt%, more preferably 1.0 wt% to 5.5 wt%, even more preferably 1.5 wt% to 5.0 wt%.

Preferably, any propylene copolymer being present in the matrix is a propylene random copolymer. The term "propylene random copolymer" is known in the technical field of polymers and relates to a polypropylene wherein the comonomer units are randomly/statistically inserted within the polymer chain.

In the present invention, the term "matrix" is to be interpreted in its commonly accepted meaning, i.e. it refers to a continuous phase (in the present invention a continuous polymer phase) in which isolated or discrete particles such as rubber particles may be dispersed. The propylene copolymer is present in such an amount so as to form a continuous phase which can act as a matrix.

Preferably, the propylene copolymer or the blend of propylene copolymers represents at least 90 wt%, more preferably at least 95 wt% of the matrix.

In a preferred embodiment, the matrix comprises at least one propylene copolymer which is a propylene/ethylene copolymer, optionally further comprising C₄₋₁₂ alpha-olefin-derived comonomer units. Preferably, the propylene/ethylene copolymer is the only propylene copolymer being present in the matrix.

Preferably, the matrix and/or the propylene copolymer(s) of the matrix has/have a MFR(2.16 kg, 230°C) within the range of 0.05 g/ 10 min to 5.0 g/ 10 min, more preferably 0.5 g/10 min to 3.0 g/10 min.

Preferably, the matrix comprises less than 15 wt%, more preferably less than 10 wt%, even more preferably less than 5 wt% of a propylene homopolymer. Even further preferably, the matrix does not contain a propylene homopolymer.

The propylene copolymer(s) of the matrix can be unimodal. However, within the present invention, it is also possible that the propylene copolymer(s) is/are multimodal, e.g. bimodal. "Multimodal" or "multimodal distribution" describes a frequency distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in a sequential step process, i.e. by utilizing reactors coupled in serial configuration, and using different conditions in each reactor, the different polymer fractions produced in the different reactors each have their own molecular weight distribution which may considerably differ from one another. The molecular weight distribution curve of the resulting final polymer can be seen as super-imposing of molecular weight distribution curves of the individual polymer fractions which will, accordingly, show distinct maxima, or at least be distinctively broadened compared with the curves for individual fractions. A polymer showing such molecular weight distribution curve is called bimodal or multimodal, respectively.

As indicated above, the heterophasic polymer composition comprises an elastomeric propylene copolymer which is dispersed within the matrix and comprises comonomer units derived from ethylene and/or a C₄₋₁₂ alpha-olefin.

As used in the present invention, the term "elastomeric" corresponds to the commonly accepted meaning and refers to a rubber-like polymeric material of more or less amorphous nature.

The elastomeric copolymer is dispersed within the propylene polymer matrix, i.e. it does not form a continuous phase but is rather present as separated areas distributed throughout the polypropylene constituting the matrix.

Preferably, the elastomeric propylene copolymer is an ethylene/propylene rubber (EPR), which may additionally comprise C₄₋₁₂ alpha-olefin-derived comonomer units.

In a preferred embodiment, the elastomeric propylene copolymer, more preferably the ethylene/propylene rubber has an amount of ethylene- and/or C4-12 alpha-olefin-derived comonomer units, more preferably ethylene-derived comonomer units within the range of 20 wt% to 80 wt%, more preferably 20 wt% to 70 wt%, even more preferably 20 wt% to 50 wt%.

As indicated above, the heterophasic polymer composition contains a polymeric alpha-nucleating agent which comprises monomer units derived from a vinyl compound of the following chemical formula 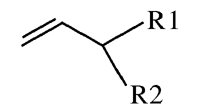 wherein R1 and R2 independently from each other represent a substituted or unsubstituted alkyl, cycloalkyl or aryl, or R1 and R2 together form a saturated, unsaturated or aromatic ring system.

In the context of the present invention, the term "alpha-nucleating agent" is to be understood in its commonly accepted meaning, i.e. it refers to an additive which favours the formation of the crystal alpha-phase of polypropylene.

Preferably, R1 and R2 independently from each other represent a C₁₋₆ alkyl group, more preferably a C₁₋₄ alkyl group, or a 5- or 6-membered cycloalkyl group (cyclopentyl, cyclohexyl).

According to another preferred embodiment, R1 and R2 together form a 5- or 6-membered cycloalkyl group.

Preferably, the vinyl compound is selected from the group consisting of vinyl cyclohexane, vinyl cyclopentane, vinyl 2-methyl cyclohexane and vinyl norbomane, 3-methyl-1-pentene, styrene, p-methyl-styrene, 4-methyl-1-pentene, 3-methyl-1-butene, 3-ethyl-1-hexene, or any mixture thereof.

Preferably, at least 90 mol%, more preferably 100 mol% of the monomer units of the polymeric alpha-nucleating agent are derived from the vinyl compound.

Preferably, the polymeric alpha-nucleating agent is present in the heterophasic polymer composition in an amount of 0.0001 wt% to 0.2 wt%, more preferably 0.0002 wt% to 0.05 wt%.

Preferably, the heterophasic polymer composition contains less than 0.2 wt-ppm of unpolymerised vinyl compounds (i.e. vinyl compounds which are still present as a single compound and have not reacted with another vinyl compound).

Further information about the polymeric alpha-nucleating agent can be found e.g. in WO 99/24479, WO 00/68315, and EP 1 818 365 A1, the content of these documents herewith being included into the present application.

As indicated above, the heterophasic polymer composition of the present invention has a xylene cold soluble fraction of at least 15 wt%.

The xylene cold soluble fraction comprises the amorphous parts of the polypropylene matrix and the total amount of rubber dispersed within the matrix. However, as a first approximation, the xylene cold soluble fraction of the heterophasic polymer composition indicates the total amount of rubber. Xylene cold soluble fraction (XCS) is easy to measure and frequently used as a parameter indicating the amount of elastomeric components within heterophasic compositions.

Preferably, the xylene cold soluble fraction of the heterophasic polymer composition is at least 20 wt%, more preferably at least 22 wt%, even more preferably at least 26 wt%. A preferred range is from 20 wt% to 60 wt%, more preferably 22 wt% to 55 wt%, even more preferably 26 wt% to 50 wt%.

Preferably, the xylene cold soluble fraction of the heterophasic polymer composition has an amount of ethylene- and/or C₄₋₁₂ alpha-olefin-derived comonomer units, more preferably an amount of ethylene-derived comonomer units within the range of 20 wt% to 80 wt%, more preferably 20 wt% to 70 wt%, even more preferably 20 wt% to 50 wt%.

Preferably, the xylene cold soluble fraction of the heterophasic polymer composition has an intrinsic viscosity within the range of 1.0 dl/g to 4.0 dl/g, more preferably 1.5 dl/g to 3.5 dl/g, even more preferably 2.2 dl/g to 3.5 dl/g. Intrinsic viscosity is an indirect measure of the molecular weight of the polymer(s) being present in the xylene cold soluble fraction, i.e. high values of intrinsic viscosity correspond to high molecular weight values.

Preferably, the heterophasic polymer composition has a MFR(2.16 kg/230°C) of 5 g/10 min or less, more preferably within the range of 0.05 to 4.5 g/10 min, even more preferably 0.1 to 3.5 g/10 min.

Preferably, the heterophasic polymer composition has an amount of ethylene- and/or C₄₋₁₂ alpha-olefin-derived comonomer units, more preferably an amount of ethylene-derived comonomer units of at least 8.0 wt%, more preferably at least 10.0 wt%, even more preferably at least 12.0 wt%, and even further preferably at least 14.0 wt%. A preferred range is from 8.0 wt% to 35 wt%, more preferably from 10.0 wt% to 30 wt%, even more preferably from 12.0 wt% to 28 wt%.

Preferably, the heterophasic polymer composition has a xylene cold unsoluble fraction (XCU fraction) which has an amount of ethylene- and/or C₄₋₁₂ alpha-olefin-derived comonomer units of at least 0.5 wt%, more preferably at least 1.5 wt%, even more preferably at least 2.5 wt%. As a preferred upper limit with respect to the amount of ethylene- and/or C₄₋₁₂ alpha-olefin-derived comonomer units of the XCU fraction, a value of 15.0 wt%, more preferably 12.0 wt% can be mentioned.

Preferably, the heterophasic polymer composition has a crystallization temperature Tc within the range of 105°C to 124°C, more preferably 108°C to 120°C, even more preferably 110°C to 118°C. Due to the presence of the polymeric alpha-nucleating agent, the heterophasic polymer composition has an increased crystallization temperature Tc if compared to a non-nucleated but otherwise identical heterophasic polymer composition. As a result of increased Tc, higher extrusion rates are possible.

Preferably, the heterophasic polymer composition has an electrical breakdown strength EB63%, measured according to IEC 60243-part 1, of at least 80 kV/mm, more preferably at least 82 kV/mm, and/or a dissipation factor tan δ, measured according to ASTM D150-1995 at 90°C, of less than 1.5 x 10⁻⁴, more preferably less than 1.3 x 10⁻⁴, even more preferably less than 1.1 x 10⁻⁴

Preferably, the heterophasic polymer composition has a flexural modulus of less than 1000 MPa, more preferably less than 800 MPa, even more preferably less than 600 MPa.

According to a further aspect, the present invention also provides a process for the preparation of the heterophasic polymer composition as described above, comprising the following steps:
(i) preparing the polymeric alpha-nucleating agent in the presence of a catalyst system so as to obtain a modified catalyst system,
(ii) preparing the propylene copolymer(s) of the matrix in at least one reactor in the presence of the modified catalyst system, and
(iii) transferring the matrix propylene copolymer(s) to another reactor and preparing the elastomeric propylene copolymer.

Preferably, the catalyst system comprises a Ziegler-Natta catalyst or a single site catalyst such as a metallocene catalyst.

Preferably, the catalyst system comprises a Ziegler-Natta catalyst which can be used at high polymerization temperature of 80°C or more.

Preferably, the Ziegler-Natta catalyst used in the present invention comprises a catalyst component, a cocatalyst component, an external donor, the catalyst component of the catalyst system primarily containing magnesium, titanium, halogen and an internal donor.

The catalyst preferably contains a transition metal compound as a procatalyst component.

The transition metal compound is preferably selected from the group of titanium compounds having an oxidation degree of 3 or 4, vanadium compounds, zirconium compounds, chromium compounds, cobalt compounds, nickel compounds, tungsten compounds and rare earth metal compounds, titanium trichloride and titanium tetrachloride being particularly preferred.

Examples of suitable catalyst systems are described in, for example, Finnish Patents Nos. 86866, 96615, 88047 and 88048.

A catalyst system useful in the present process can be prepared by reacting a magnesium halide compound with titanium tetrachloride and an internal donor. The magnesium halide compound is, for example, selected from the group of magnesium chloride, a complex of magnesium chloride with a lower alkanol and other derivatives of magnesium chloride.

The catalyst is preferably used together with an organometallic cocatalyst and with an external donor. Generally, suitable external donors can be selected from those having the following chemical formula:

RₙR'ₘSi(R"O)₄₋ₙ₋ₘ

wherein
R and R', which can be the same or different, are independently from each other a linear, branched or cyclic, aliphatic, or aromatic group;
R" is methyl or ethyl;
n is an integer from 0 to 3;
m is an integer from 0 to 3;
n+m is 1 to 3.

An organoaluminum compound is preferably used as a cocatalyst. The organoaluminium compound is preferably selected from the group consisting of trialkylaluminium, dialkyl aluminium chloride and alkyl aluminium sesquichloride.

Further details about the catalyst system are provided e.g. in WO 99/24479 and WO 00/68315.

In a preferred embodiment, the catalyst modification comprises the following steps: (i) introducing the catalyst system into a reactor, (ii) feeding the vinyl compound to the reactor, (iii) subjecting the vinyl compound to a polymerization reaction in the presence of said catalyst system at a temperature of 35 to 65°C, and (iv) continuing the polymerization reaction until a maximum concentration of the unreacted vinyl compound of less than 2000, preferably less than 1000 ppm by weight, is obtained.

Preferably, the weight ratio of the vinyl compound fed to a reactor for preparing the polymeric alpha-nucleating agent to the catalyst system is within the range of 0.05 to 50 , more preferably 0.08 to 40 , even more preferably 0.08 to 15.

The modified catalyst system is subsequently used for the preparation of the heterophasic polymer composition.

The propylene copolymer(s) of the matrix can be prepared in a single reactor, preferably a slurry reactor such as a loop reactor. Alternatively, the propylene copolymer(s) of the matrix can be prepared in two or more reactors operating in serial configuration, e.g. one or more loop reactors followed by one or more gas phase reactors. Appropriate reaction conditions for the preparation of propylene copolymers, preferably propylene random copolymers, are known to the skilled person.

The propylene copolymer or the blend of propylene copolymers constituting the matrix is subsequently transferred to another reactor, e.g. a gas phase reactor, where the elastomeric propylene copolymer is prepared.

The elastomeric propylene copolymer can be prepared by known processes such as solution, suspension and gas-phase polymerisation.

A widely used process is the solution polymerisation. Propylene together with ethylene and/or a C₄₋₁₂ alpha-olefin such as 1-butene are polymerised in the presence of a catalyst system in an excess of hydrocarbon solvent. Stabilisers and oils, if used, are added directly after polymerisation. The solvent and unreacted monomers are then flashed off with hot water or steam, or with mechanical devolatilisation. The polymer, which is in crumb form, is dried with dewatering in screens, mechanical presses or drying ovens. The crumb is formed into wrapped bales or extruded into pellets.

The suspension polymerisation process is a modification of bulk polymerisation. The monomers and catalyst system are injected into the reactor filled with propylene. The polymerisation takes place immediately, forming crumbs of polymer that are not soluble in the propylene. By flashing off the propylene and comonomers, the polymerisation process is completed.

The gas-phase polymerisation technology uses one or more vertical fluidised beds. Monomers and nitrogen in gas form along with catalyst are fed to the reactor and solid product is removed periodically. Heat of reaction is removed through the use of the circulating gas that also serves to fluidise the polymer bed. Solvents are not used, thereby eliminating the need for solvent stripping, washing and drying.

Further information about the production of elastomeric copolymers is also provided in e.g. US 3,300,459, US 5,919,877, EP 0 060 090 Al and in a company publication by EniChem "DUTRAL, Ethylene-Propylene Elastomers", pages 1-4 (1991).

According to a further aspect, the present invention provides an electrical cable, in particular a power cable, comprising a conductor and at least one cable layer which comprises the heterophasic polymer composition as defined above.

The cable can be prepared by known methods. Preferably, the cable layer comprising the heterophasic polymer composition as defined above, is applied onto the conductor and/or another cable layer by extrusion.

Preferably, the cable comprises an insulation layer, a semiconductive layer ("semicon") and/or a jacketing layer as coating layers. Preferably, at least the insulation layer comprises the heterophasic polymer composition as defined above.

For low voltage applications, the cable system shall preferably either consist of one conductor and one insulation layer, or of one conductor, one insulation layer and an additional jacketing layer, or of one conductor, one semiconductive layer and one insulation layer. For medium and high voltage applications it shall preferably consist of one conductor, one inner semiconductive layer, one insulation layer and one outer semiconductive layer, optionally covered by an additionally jacketing layer. The semiconductive layers mentioned consist preferably of a thermoplastic polyolefin composition containing a sufficient amount of electrically conducting solid fillers, preferably carbon black.

The final cable can also consist of multiple conductors or cores (normally 1,2,3 or 4) combined with single and common insulation layers.

According to a further aspect, the present invention provides the use of the heterophasic polymer composition as defined above for the preparation of a cable layer. Preferably, the cable layer is an insulation layer of a power cable, e.g. a medium or high voltage power cable.

The invention will now be described in further detail by the examples provided below.

### Examples

### 1. Measuring Methods

The following definitions of terms and determination methods apply to the above general description of the invention as well as to the examples provided below, unless otherwise defined.

**Number average molecular weight (Mₙ), weight average molecular weight (M_{w}) and molecular weight distribution (MWD)** are determined by size exclusion chromatography (SEC) using Waters Alliance GPCV 2000 instrument with online viscometer. The oven temperature is 140 °C. Trichlorobenzene is used as a solvent (ISO 16014).

**MFR₂** (230 °C) is measured according to ISO 1133 (230 °C, 2.16 kg load).

### Quantification of comonomer content by FTIR spectroscopy

The comonomer content is determined by quantitative Fourier transform infrared spectroscopy (FTIR) after basic assignment calibrated via quantitative ¹³C nuclear magnetic resonance (NMR) spectroscopy in a manner well known in the art. Thin films are pressed to a thickness of between 100-500 µm and spectra recorded in transmission mode.

Specifically, the ethylene content of a polypropylene-co-ethylene copolymer is determined using the baseline corrected peak area of the quantitative bands found at 720-722 and 730-733 cm⁻¹. Quantitative results are obtained based upon reference to the film thickness.

### Quantification of comonomer content by ¹³C NMR spectroscopy

The comonomer content is determined by quantitative ¹³C nuclear magnetic resonance (NMR) spectroscopy after basic assignment as e.g. in: A. J. Brandolini and D. D. Hills, NMR Spectra of Polymers and Polymer Additives, 2000, Marcel Dekker Inc., New York and U. Wahner et al., Macromolecular Chemistry and Physics, 2003, 204, 1738. Experimental parameters are adjusted to ensure measurement of quantitative spectra for this specific task as e.g in: S. Berger and S. Braun, 200 and More NMR Experiments: A Practical Course, 2004, Wiley-VCH, Weinheim. Quantities are calculated using simple corrected ratios of the signal integrals of representative sites in a manner known in the art.

**Intrinsic viscosity** is measured according to DIN ISO 1628/1, October 1999 (in Decalin at 135 °C).

**Tensile Modulus** is evaluated according to ISO 527-1 (cross head speed = 1 mm/min; 23 °C) using injection molded specimens as described in EN ISO 294-1 (multipurpose test specimen as described in ISO 527-2).

**Strain at break:** Modulus is measured according to ISO 527-1 (cross head speed = 50 mm/min; 23 °C) using injection molded specimens as described in EN ISO 294-1 (multipurpose test specimen as described in ISO 527-2).

**Tensile Strength** is measured according to ISO 527-1 (cross head speed = 50 mm/min; 23 °C) using injection molded specimens as described in EN ISO 294-1 (multipurpose test specimen as described in ISO 527-2).

**Flexural modulus** is measured according to ISO 178. The flexural modulus is measured on samples prepared from injection molded specimens as described in EN ISO 1873-2 (80 x 10 x 4 mm)

**Charpy impact test:** The Charpy notched impact strength (Charpy NIS) is measured according to ISO 179 1eA at 23 °C and -20 °C, respectively, using injection moulded bar test specimens according to ISO 294-1, see "flexural modulus".

**The xylene cold solubles (XCS, wt.-%):** Content of xylene cold solubles (XCS) is determined at 23 °C according ISO 6427.

T**he xylene cold unsolubles (XCU, wt%):** Calculated from XCS; XCU=100-XCS

### Crystallisation temperature Tc

Crystallisation temperature is determined by DSC measurement according to ISO 3146 at a cooling rate of 10 K/min after a first heating to 200 °C.

### Melting temperature Tm

Melting temperature (peak temperature) Tm was measured with differential scanning calorimetry (DSC) by using a temperature increasing rate of 10 K/min, according to ISO 3146 in the second heat at a heating rate of 10 K/min.

### Degree of crystallinity

The degree of crystallinity is measured by DSC. A melting curve is obtained as described above under the headline "Melting temperature" and the melting enthalpy is determined. The degree of crystallinity is calculated via the ratio of the measured melting enthalpy to the melting enthalpy of a perfectly crystalline polypropylene, i.e. 209 J/g.

### Electrical breakdown strength (EB63%)

The measurement follows standard IEC 60243-part 1 (1988).

The method describes a way to measure the electrical breakdown strength for insulation materials on compression moulded plaques.

### Definition:

Eb: " The electrical field strength in the test sample at which breakdown occurs. In homogeneous plaques and films this corresponds to the electrical breakdown strength divided by the thickness of the plaque/film (d), unit: kV/mm. "

The electrical breakdown strength is determined at 50 Hz within a high voltage cabinet using metal rods as electrodes as described in IEC60243-1 (4.1.2). The voltage is raised over the film/plaque at 2 kV/s until a breakdown occurs.

### Dissipation factor + Relative permittivity

Four plaques of diameter 95 ± 5 mm and thickness 3 ± 0.1 mm are pressmoulded. Aluminium foils are put between the pellets and the lower and upper metal plates. The press is heated to 225°C before the plates are introduced in the press. A high pressure of 200 bars are kept for 10 minutes. Thereafter the press is cooled to 23°C using a cooling rate of 15 ± 5°C/min.

The dielectric measurements are carried out on the plaques at 50 Hz using a Schering bridge from TETTEX: Model 2822 together with test cell model 2914. The electrode pressure is 6 N/m² the applied voltage 500 V. The dissipation factor and the capacitance of the plaque are directly obtained from the measurement. The relative permittivity can be calculated from the capacitance and the thickness of the plaque (determined by a micrometer). At measurements at elevated temperatures, the plaques are heated inside the testcell for 20 min before measurement.

The procedure is in agreement with the standard ASTM D150-1995.

### 2. Preparation of the samples

### Sample CE1

A polypropylene polymer composition CE1 was produced in a multistage polymerization process pilot plant consisting of a loop reactor and two gas phase reactors using a Ziegler Natta catalyst prepared according to example 8 of WO2004/029112 except that diethylaluminium chloride was used as an aluminium compound instead of triethylaluminium. As external donor is used dicyclopentyl dimethoxy silane and TEAL as cocatalyst. In the loop reactor (loop temperature 75°C, loop share of split matrix 50%) and the first gas phase reactor (1.GPR temperature 85°C), a propylene random copolymer with an ethylene content of 4.1 wt.-% and MFR of 0.90g/10min was produced. The polymer was transferred to the second gas phase reactor (2. GPR temperature 80°C), where an elastomeric ethylene-propylene-copolymer (EPR) was synthesized. The final composition had an MFR value of 0.80 g/10min, a xylene cold soluble (XCS) value of 27.5 wt.-% and the intrinsic viscosity of AM was 2.5 dl/g. The ethylene content of the XCS part was 32.0 wt.-%. The total ethylene content in the entire composition was 15.5 wt.-%.

### Sample CE2

Sample CE1 was compounded with 0.1 wt% of 1,3:2,4-bis(3,4-dimethylbenzylidene)sorbitol, which is known to be an alpha-nucleating agent. The nucleation was effected by dosing the polymer and the nucleating agent into a twin screw extruder like Prism TSE24 40D with preferably a temperature profile of 80/200/210/220/220/230/230/220/225/220 C and a screw speed of 300 rpm. The final polymer melt / additive mixture is discharged and pelletised. The alpha-nucleated heterophasic polymer composition had an MFR(230°C, 2.16 kg) of 0.45 g/10 min, a melting temperature Tm of 148°C, and a crystallization temperature of 115°C.

### Sample IE1

Sample IE1 was prepared in accordance with the preparation method of sample CE1, with the exception that the Ziegler-Natta catalyst was modified by prepolymerisation with vinyl cyclohexane (VCH) according to the method described in Example 1 of WO00/68315 with the exception that the D/Ti ratio was 1.0, the Al/Ti ratio was 2.8 and the VCH/catalyst ratio was 0.1.

In the final heterophasic polymer composition, the polymeric alpha-nucleating agent was present in an amount of about 0.00035 wt%. The heterophasic polymer composition had an MFR(230°C, 2.16 kg) of 0.49 g/10 min, a melting temperature Tm of 148°C, and a crystallization temperature Tc of 114°C.

Some mechanical properties of samples CE1, CE2, and IE1 are shown in Table 1.

**Table 1: Mechanical properties of samples CE1, CE2, and IE1**

| Sample | Flexural modulus [MPa] | Tensile modulus [MPa] | Tensile strength [MPa] | Elongation at break [%] | Notched impact strength RT [kJ/m2] | Notched impact strength at -20°C [kJ/m2] |
|---|---|---|---|---|---|---|
| CE1 | 422 | 457 | 20.4 | 437 | 93.5 | 8.0 |
| CE2 | 464 | 501 | 21.1 | 443 | 92.3 | 8.0 |
| IE1 | 476 | 499 | 21.1 | 438 | 93.0 | 7.6 |

Electrical properties are shown in Table 2.

**Table 2: Electrical properties of samples CE1, CE2, and IE1**

| Sample | Electrical breakdown strength EB63% [kV/mm] | Relative permittivity | | | Dissipation factor tan δ [10⁻⁴] | | |
|---|---|---|---|---|---|---|---|
| | | 23°C | 90°C | 130°C | 23°C | 90°C | 130°C |
| CE1 | 78.8 | 2.2 | 2.2 | 2.1 | 2.3 | 1.5 | 5.4 |
| CE2 | 75.9 | 2.1 | 2.1 | 2.1 | 1.8 | 2.1 | 6.0 |
| IE1 | 85.4 | 2.2 | 2.1 | 2.1 | 2.1 | 1.0 | 3.7 |

The data shown in Table 1 demonstrate that addition of an alpha-nucleating agent to a heterophasic polymer composition having a matrix which is predominantly made of a propylene copolymer results in a very moderate increase in tensile modulus and flexural modulus, thereby enabling the production of cable layers still having sufficient softness.

However, as demonstrated by the experimental data of Table 2, it is only the polymeric alpha-nucleating agent comprising vinyl compound-derived monomer units which results in an improvement of electrical properties. The alpha-nucleating agent used in Example CE2 even results in a degradation of electrical properties.

Thus, as shown by the experimental results, the heterophasic polymer composition of the present invention enables the production of cable layers having improved electrical properties while still keeping flexibility on an acceptable level.

## Claims

1. A heterophasic polymer composition, comprising
(i) a matrix which comprises a propylene copolymer or a blend of two or more propylene copolymers, wherein the propylene copolymer or the blend of propylene copolymers represents at least 85 wt% of the matrix and comprises comonomer units derived from ethylene and/or a C₄₋₁₂ alpha-olefin, and
(ii) an elastomeric propylene copolymer which is dispersed within the matrix and comprises comonomer units derived from ethylene and/or a C₄₋₁₂ alpha-olefin;
(iii) a polymeric alpha-nucleating agent which comprises monomer units derived from a vinyl compound of the following chemical formula 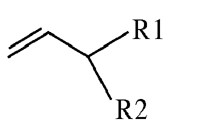 wherein R1 and R2 independently from each other represent a substituted or unsubstituted alkyl, cycloalkyl or aryl, or R1 and R2 together form a saturated, unsaturated or aromatic ring system;
the heterophasic polymer composition further having
(iv) a xylene cold soluble fraction of at least 15 wt%.

2. The heterophasic polymer composition according to one of the preceding claims, wherein the matrix and/or the propylene copolymer(s) of the matrix has/have an amount of comonomer units of 0.5 wt% to 6.0 wt%.

3. The heterophasic polymer composition according to one of the preceding claims, wherein the matrix comprises at least one propylene copolymer which is a propylene/ethylene copolymer, optionally further comprising C₄₋₁₂ alpha-olefin-derived comonomer units.

4. The heterophasic polymer composition according to one of the preceding claims, wherein the elastomeric propylene copolymer is an ethylene/propylene rubber (EPR).

5. The heterophasic polymer composition according to one of the preceding claims, wherein R1 and R2 independently from each other represent a C₁₋₆ alkyl group or a 5- or 6-membered cycloalkyl group.

6. The heterophasic polymer composition according to one of the claims 1 to 4, wherein R1 and R2 together form a 5- or 6-membered cycloalkyl group.

7. The heterophasic polymer composition according to one of the preceding claims, wherein at least 90 mol% of the monomer units of the polymeric alpha-nucleating agent are derived from the vinyl compound.

8. The heterophasic polymer composition according to one of the preceding claims, wherein the polymeric alpha-nucleating agent is present in the heterophasic polymer composition in an amount of 0.0001 to 0.2 wt%.

9. The heterophasic polymer composition according to one of the preceding claims, wherein the xylene cold soluble fraction of the heterophasic polymer composition has an amount of ethylene- and/or C₄₋₁₂ alpha-olefin-derived comonomer units within the range of 20 wt% to 80 wt%.

10. The heterophasic polymer composition according to one of the preceding claims, having a xylene cold unsoluble fraction (XCU) which has an amount of ethylene- and/or C₄₋₁₂ alpha-olefin-derived comonomer units within the range of 0.5 to 15.0 wt%.

11. The heterophasic polymer composition according to one of the preceding claims, having an MFR(2.16 kg/230°C) of 5.0 g/10 min or less, more preferably within the range of 0.05 to 4.5 g/10 min.

12. The heterophasic polymer composition according to one of the preceding claims, having an amount of ethylene- and/or C₄₋₁₂ alpha-olefin-derived comonomer units within the range of 8.0 wt% to 35.0 wt%, more preferably 10.0 wt% to 30.0 wt%.

13. The heterophasic polymer composition according to one of the preceding claims, having a crystallization temperature Tc within the range of 105°C to 124°C, more preferably 108°C to 120°C.

14. The heterophasic polymer composition according to one of the preceding claims, having an electrical breakdown strength EB63%, measured according to IEC 60243-part 1, of at least 80 kV/mm, and/or a dissipation factor tan δ, measured according to ASTM D150-1995 at 90°C, of less than 1.5 x 10⁻⁴, more preferably less than 1.3 x 10⁻⁴.

15. The heterophasic polymer composition according to one of the preceding claims, having a flexural modulus of less than 1000 MPa, more preferably less than 800 MPa.

16. A process for the preparation of the heterophasic polymer composition according to one of the claims 1 to 15, comprising the following steps:
(i) preparing the polymeric alpha-nucleating agent in the presence of a catalyst system so as to obtain a modified catalyst system,
(ii) preparing the propylene copolymer of the matrix in at least one reactor in the presence of the modified catalyst system, and
(iii) transferring the matrix propylene copolymer to another reactor and preparing the elastomeric propylene copolymer.

17. The process according to claim 16, wherein the catalyst system comprises a Ziegler-Natta catalyst or a single site catalyst.

18. The process according to claim 16 or 17, wherein the weight ratio of the vinyl compound fed to a reactor for preparing the polymeric alpha-nucleating agent to the catalyst system is within the range of 0.05 to 50, more preferably 0.08 to 40.

19. An electric cable, comprising a conductor and at least one cable layer which comprises the heterophasic polymer composition according to one of the claims 1 to 15.

20. Use of the heterophasic polymer composition according to one of the claims 1 to 15 for the preparation of a cable layer.
